# EUROPÄISCHE PATENTSCHRIFT

(11) **EP 2 362 079 B1**
(45) Veröffentlichungstag und Bekanntmachung des Hinweises auf die Patenterteilung: **28.06.2017**
(21) Anmeldenummer: 11153314.7
(22) Anmeldetag: 04.02.2011
(51) Int. Cl.: F02C 6/08, F04D 27/02

(54) **Gasturbine mit einer Zapflufteinrichtung für den Verdichter**
Gas turbine with a bleed air device for the compressor
Turbine à gaz comprenant un dispositif de prélèvement d'air du compresseur

(30) Priorität: 18.02.2010 DE 102010002114
(43) Veröffentlichungstag der Anmeldung: 31.08.2011
(73) Patentinhaber: Rolls-Royce Deutschland Ltd & Co KG, 15827 Blankenfelde-Mahlow (DE)
(72) Erfinder: Johann, Erik, 10623 Berlin (DE)
(74) Vertreter: Maikowski & Ninnemann Patentanwälte Partnerschaft mbB

(56) Entgegenhaltungen:
- DE-A1- 4 326 799
- GB-A- 697 119
- JP-A- 62 168 999
- US-A- 2 399 072
- US-A- 2 837 270
- US-A- 3 070 131
- US-A- 5 160 241
- US-A1- 2009 000 307

## Beschreibung

Die Erfindung betrifft eine Gasturbine mit einer Zapflufteinrichtung für den Verdichter.

Stand der Technik ist, dass bei Gasturbinen Zapfluft aus dem Verdichter entnommen wird, die verschiedenen Zwecken dient, z.B. dem Handling, der Enteisung, der Startluft und/oder der Kabinenluft. Die Zapfluftentnahme erfolgt über so genannte Zapfstellen (engl.: bleed ports), wobei die Verdichterstufe, aus der die Zapfluft entnommen wird, ungleichmäßig belastet wird und dadurch der Verdichter zum vorzeitigen Pumpen neigen kann. Die Zapfstellen können aus Umfangsnuten oder Öffnungen (engl.: bleed slots) gebildet sein.

Die ungleichmäßige Zapfluftentnahme an den Zapfstellen führt zu einer ungleichmäßigen Stufenbelastung der beteiligten Stufen, mit der Folge, dass diese Stufen oder nachfolgende Stufen für den Gesamtverdichter ein Pumpen auslösen können.

Die DE 10 2008 014 957 A1 offenbart Zapfluftentnahmestutzen mit einer speziellen Geometrie an einem Verdichter einer Gasturbine, in die die Strömung ohne Störung einfließen kann. Dies führt zu einer Minimierung des lokalen Totaldruckverlustes. Außerdem wird die Strömung in dem Zapfluftentnahmestutzen so umgelenkt, dass der Drall der Strömung auf Null reduziert wird und dadurch ein Maximum an statischer Druckrückgewinnung erzielt wird. Dabei wird jedoch nur der Druck in den Zapfluftentnahmestutzen optimiert.

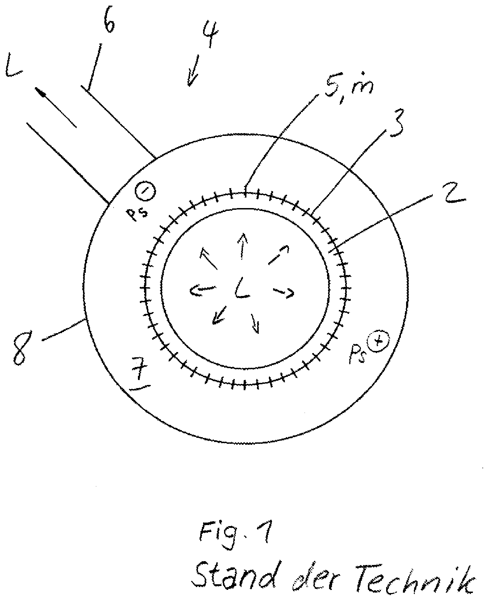

Oft ist zwischen den Zapfstellen und den Zapfluftentnahme-stutzen auch noch eine Zapfluftkammer vorhanden (vgl. Fig. 1). In der Zapfluftkammer werden die Druckverhältnisse durch die Anordnung der Zapfluftentnahmestutzen bestimmt. Die Zapfluftentnahmestutzen sind auf Grund der Bauraumverhältnisse oft ungleichmäßig verteilt.

Die über die Zapfstellen austretende Zapfluft bildet am Umfang unterschiedlich große Teilmassenströme in radialer Richtung. Im Bereich eines Zapfluftentnahmestutzens sind die Teilmassenströme grösser als zwischen den Zapfluftentnahmestutzen. Der Druck ist gegenüber vom Zapfluftentnahmestutzen am größten und nimmt in Richtung zum Zapfluftentnahmestutzen kontinuierlich ab. Dadurch wird das Verhalten der Stufe verändert, so dass die Stufe instabil werden kann. Dies kann eine Absenkung der Pumpgrenze bewirken und ein Pumpen des Verdichters auslösen.

Die US 2,837,270 beschreibt einen Kompressor. An einem äußeren Gehäuse des Kompressors sind zwei Auslassrohre vorgesehen, die über jeweilige Ansaugstutzen mit Öffnungen einer Kompressorkammer verbunden sind. Über zwei Ventile kann eine Zapfluftentnahme gesteuert werden.

Aus der US 5,160,241 ist eine Zapflufteinrichtung für eine Gasturbine bekannt. Dort sind an der Zapflufteinrichtung Zapfluftentnahmestutzen und Zapfstellen vorgesehen, wobei zwischen den Zapfstellen und den Zapfluftentnahmestutzen eine Zapfluftkammer ausgebildet ist. Die Zapfluftentnahmestutzen weisen jeweils eine Vielzahl von Lochungen auf.

Die US 2009/0000307 A1 und die JP 62168999 offenbaren jeweils eine Zapflufteinrichtung, bei der Zapfluft über Zapfstellen und Zapfluftentnahmestutzen aus einem Verdichter entnommen werden kann.

Der Erfindung liegt daher die Aufgabe zu Grunde, die Druckverhältnisse in der Zapfluftkammer zu verbessern und dadurch die Absenkung der Pumpgrenze des Verdichters zu verhindern.

Diese Aufgabe wird erfindungsgemäß mit einer Gasturbine mit einer Zapflufteinrichtung für den Verdichter nach Anspruch 1 gelöst. Vorteilhafte Ausgestaltungen der Erfindung sind in den Unteransprüchen enthalten.

Erfindungsgemäß besteht die Lösung der Aufgabe in einer Gasturbine mit einer Zapflufteinrichtung für den Verdichter, die mindestens eine Zapfstelle am Gehäuse des Verdichters und mindestens einen Zapfluftentnahmestutzen umfasst, wobei zwischen der Zapfstelle und dem Zapfluftentnahmestutzen eine Zapfluftkammer ausgebildet ist, dadurch gekennzeichnet, dass die Zapflufteinrichtung mindestens eine Vorrichtung umfasst, mittels derer zumindest ein Teil der Zapfluft in gleichmäßigen Teilmassenströmen aus der Zapfstelle heraus leitbar ist.

Dadurch werden die Teilmassenströme vergleichmäßigt, so dass ein gleichmäßiger Druck in der Zapfluftkammer entsteht. Das Absenken der Pumpgrenze des Verdichters wird verhindert.

Erfindungsgemäß weist die Vorrichtung mindestens zwei paarweise angeordnete Spiralkammern mit jeweils einer Spiralwand gegenüber von der Zapfstelle und jeweils einer Öffnung auf, wobei der statische Druck der Zapfluft entlang der Spiralwand jeder Spiralkammer konstant ist.

Dadurch, dass der statische Druck entlang der Spiralwand konstant ist, wird die aus den Zapfstellen austretende Strömung vergleichmäßigt. Es entstehen gleich große Teilmassenströme an der Zapfstelle.

Vorzugsweise sind jeweils zwei paarweise angeordnete Spiralkammern und ein Zapfluftentnahmestutzen in diametraler Richtung einander gegenüber angeordnet.

Mit Hilfe der erfindungsgemäßen Spiralkammern wird das Druckgefälle in der Zapfluftkammer ausgeglichen.

Insbesondere sind die Öffnungen von jeweils zwei paarweise angeordneten Spiralkammern in Umfangsrichtung von einander abgewandt. Dadurch werden die Teilmassenströme in entgegen gesetzten Richtungen umgelenkt und in der Zapfluftkammer verteilt.

In einer vorteilhaften Ausgestaltung sind die Öffnungen von zwei in Umfangsrichtung gegenüber liegenden Spiralkammern zwischen zwei Zapfluftentnahmestutzen angeordnet. Diese Anordnung dient ebenfalls zur Verteilung der Teilmassenströme in der Zapfluftkammer.

In einer Ausführungsform sind die Öffnungen von zwei gegenüber liegenden Spiralkammern in Umfangsrichtung von einander beabstandet. Dadurch können die Teilmassenströme direkt aus der Spiralkammer heraus in die Zapfluftkammer strömen.

In einer alternativen Ausführungsform überlappen sich die Öffnungen von zwei gegenüber liegenden Spiralkammern in Umfangsrichtung.

Die Spiralkammern können in Längsrichtung geteilte Spiralwände aufweisen, die sich überlappen. Diese Bauweise ermöglicht eine einfachere Herstellung.

In einer bevorzugten Ausführungsform weisen die Spiralkammern einen zur Zapfstelle offenen Querschnitt auf, der einer eckigen oder abgerundeten, unterbrochenen oder ununterbrochenen mathematischen Rechteckfunktion entspricht. Diese Form ist gut geeignet, um die Teilmassenströme zu führen.

Die Spiralwand kann auch im Querschnitt kreisförmig und an der Zapfstelle unterbrochen sein.

Jede Spiralkammer kann aus mindestens einem Blech gebildet sein. Durch die Verwendung von Blechen ist eine einfache Herstellung möglich.

Das Blech kann gleichförmig oder ungleichförmig gelocht sein.

Vorzugsweise sind die Spiralkammern mittels Schrauben am Gehäuse des Verdichters befestigt. Diese Befestigungsform ermöglicht eine einfache Montage.

Insbesondere sind mehrere Zapfstellen vorhanden, die rechteckige, kreisförmige oder andere Formen oder jeweils unterschiedliche Formen aufweisen.

Weiterhin können die Zapfstellen gleiche oder unterschiedliche Größen aufweisen.

Außerdem können die Zapfstellen jeweils mit einer Rampe versehen sein.

Im Folgenden werden zwei Ausführungsbeispiele der Erfindung anhand von sieben Figuren näher erläutert. Es zeigen:
- Fig. 1: einen schematischen Querschnitt durch die Zapflufteinrichtung einer Gasturbine nach dem Stand der Technik,
- Fig. 2: einen Längsschnitt durch die Zapflufteinrichtung einer erfindungsgemäßen Gasturbine,
- Fig. 3: einen Querschnitt durch die Zapflufteinrichtung einer erfindungsgemäßen Gasturbine gemäß Fig. 2,
- Fig. 4: einen Querschnitt durch eine alternative Zapflufteinrichtung einer erfindungsgemäßen Gasturbine,
- Fig. 5: einen schematischen Längsschnitt durch eine Spiralkammer gemäß Fig. 3 oder 4,
- Fig. 6: eine schematische Vorderansicht einer Spiralkammer gemäß Fig. 3 oder 4 und
- Fig. 7: eine schematische Vorderansicht einer ersten alternativen Ausführungsform einer Spiralkammer,
- Fig. 8: eine schematische Vorderansicht einer zweiten alternativen Ausführungsform einer Spiralkammer und
- Fig. 9: eine perspektivische Ansicht einer dritten alternativen Ausführungsform einer Spiralkammer.

Fig. 1 zeigt eine Zapflufteinrichtung 4 am Verdichter 2 einer nicht weiter dargestellten Gasturbine nach dem Stand der Technik. Die Zapflufteinrichtung 4 umfasst im Wesentlichen Zapfstellen 5, einen Zapfluftentnahmestutzen 6 und eine Zapfluftkammer 7.

Die Zapflufteinrichtung 4 ist um den Verdichter 2 herum angeordnet. Der Verdichter 2 weist ein Gehäuse 3 auf, in dem eine Vielzahl von in Umfangsrichtung angeordneten Zapfstellen 5 (engl.: bleed ports) vorhanden ist, die in der Form und/oder Größe unterschiedlich ausgebildet sein können. Die Zapfstellen 5 können z.B. kreisförmig oder rechteckig sein. Andere Formen sind ebenfalls möglich. Die Zapfstellen 5 können auch jeweils mit einer Rampe versehen sein. Alternativ zu der Vielzahl von Zapfstellen 5 kann auch eine Umfangsnut als Zapfstelle 5 im Gehäuse 3 des Verdichters 2 angeordnet sein.

Die Zapfluftkammer 7 grenzt radial innen in Umfangsrichtung an das Gehäuse 3 des Verdichters 2 und damit an die Zapfstellen 5 an. Radial nach außen wird die Zapfluftkammer 7 in Umfangsrichtung von einer Wand 8 begrenzt. Der Zapfluftentnahmestutzen 6 ist mit der Zapfluftkammer 7 verbunden.

Im Betrieb strömt Zapfluft L aus dem Verdichter 2 durch die Zapfstellen 5 in die Zapfluftkammer 7. Beim Durchströmen der Zapfstellen 5 bildet die Zapfluft L eine Vielzahl von Teilmassenströmen *ṁ*. Die Teilmassenströme *ṁ* sind nahe dem Zapfluftentnahmestutzen 6 größer als gegenüber von dem Zapfluftentnahmestutzen 6, wobei die Teilmassenströme *ṁ* in Richtung zum Zapfluftentnahmestutzen 6 hin kontinuierlich zunehmen.

Im Bereich der Mündung des Zapfluftentnahmestutzens 6 in die Zapfluftkammer 7 ist ein statischer Druck pₛ⁻ vorhanden, der geringer ist als der statische Druck pₛ⁺ gegenüber von dem Zapfluftentnahmestutzen 6. Der verminderte statische Druck pₛ⁻ kann zur Folge haben, dass die Stufen des Verdichters 2 instabil werden und eine Absenkung der Pumpgrenze des Verdichters 2 erfolgt

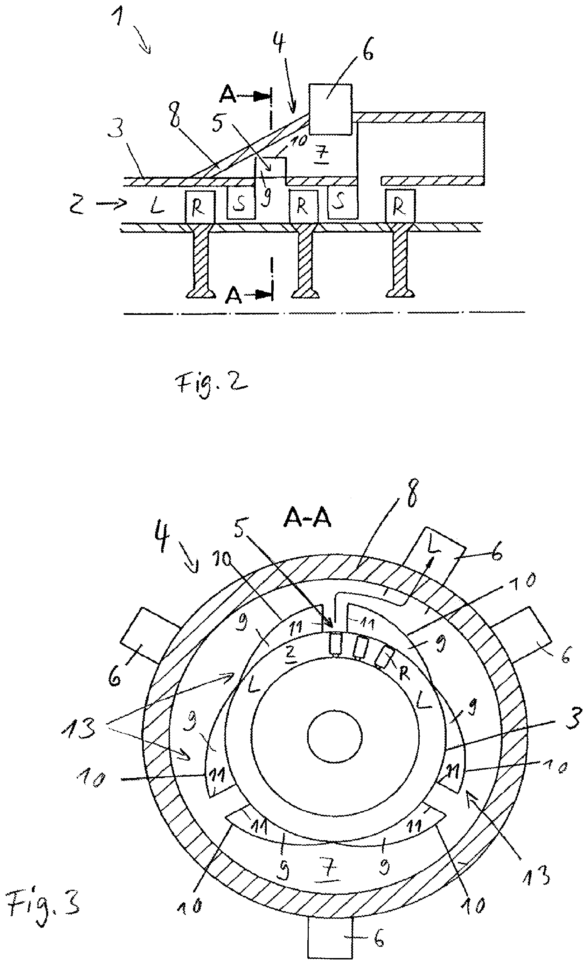

In den Fig. 2 und 3 ist die Zapflufteinrichtung 4 des Verdichters 2 in einem Ausschnitt aus der Gasturbine 1 dargestellt. Die Zapflufteinrichtung 4 umfasst im Wesentlichen Zapfstellen 5, vier Zapfluftentnahmestutzen 6, eine Zapfluftkammer 7 und eine Vorrichtung 13, die sechs Spiralkammern 9 umfasst.

Die Zapflufteinrichtung 4 ist um den Verdichter 2 herum angeordnet. Der Verdichter 2 weist ein Gehäuse 3 auf, in dem eine Vielzahl von in Umfangsrichtung angeordneten Zapfstellen 5 (engl.: bleed ports) vorhanden sind. Alternativ zu der Vielzahl von Zapfstellen 5 kann auch eine Umfangsnut als Zapfstelle 5 im Gehäuse 3 des Verdichters 2 angeordnet sein. Der Verdichter 2 umfasst außerdem Statorschaufeln S und Rotorschaufeln R.

Die Zapfluftkammer 7 grenzt radial nach innen in Umfangsrichtung an das Gehäuse 3 des Verdichters 2 und damit an die Zapfstellen 5 an. Radial nach außen wird die Zapfluftkammer 7 in Umfangsrichtung von einer Wand 8 begrenzt. Die Zapfluftentnahmestutzen 6 sind mit der Zapfluftkammer 7 verbunden.

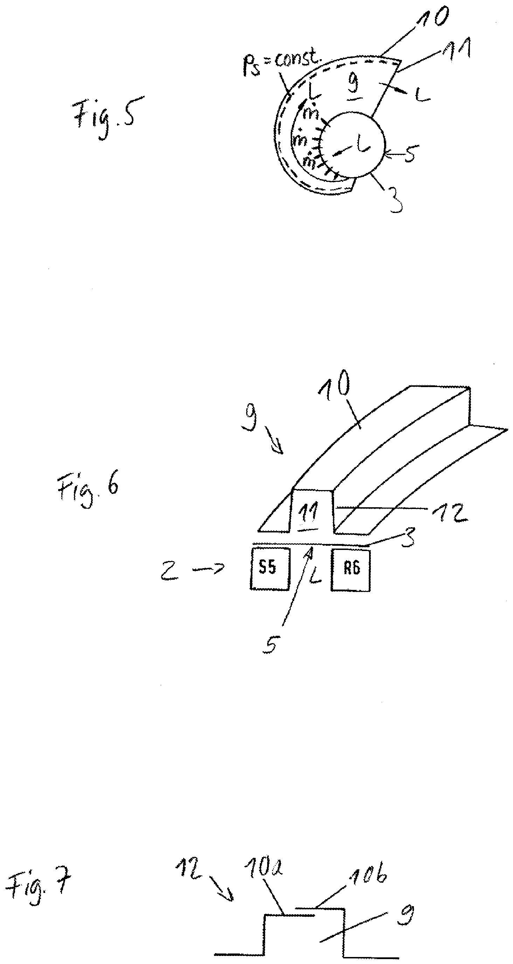

Jede Spiralkammer 9 ist gegenüber von den Zapfstellen 5 durch eine in Umfangsrichtung gebogene Spiralwand 10 begrenzt. Der Bogen jeder Spiralwand 9 beginnt radial am Gehäuse 3 des Verdichters 2 und endet in einem radialen Abstand von diesem Gehäuse 3. Im Querschnitt entsprechen die Spiralkammern 9 einer mathematischen Rechteckfunktion (vgl. Fig. 6, 7).

Es sind jeweils zwei Spiralkammern 9 paarweise mit gegensinniger Ausrichtung angeordnet, wobei die Spiralkammern 9 jeweils am Beginn der bogenförmigen Spiralwände 10 aneinander stoßen. Die Enden der bogenförmigen Spiralwände 10 bilden jeweils eine Öffnung 11. Die Öffnungen 11 von zwei benachbarten Spiralwandpaaren sind von einander beabstandet. Alternativ können sich die Öffnungen 11 auch überlappen.

In den Fig. 2 und 3 sind die Spiralkammern 9 alle gleich groß. Es können jedoch auch unterschiedliche Größen für die Spiralkammern 9 gewählt werden. Es ist eine symmetrische Anordnung der Spiralkammern 9 dargestellt, wobei aber auch eine unregelmäßige Anordnung der Spiralkammern 9 möglich ist.

Im Betrieb strömt die Zapfluft L aus dem Verdichter 2 heraus und durch die Zapfstellen 5 in die Spiralkammern 9. Die gebogenen Spiralwände 10 bewirken, dass aus den Zapfstellen 5 gleich große Teilmassenströme *ṁ* der Luft L austreten und der statische Druck pₛ an jeder Stelle einer Spiralwand 10 gleich groß ist. Durch unterschiedlich ausgebildete Zapfluftstellen 5 am Umfang des Gehäuses 3 des Verdichters 2 ist eine weitere Homogenisierung der Teilmassenströme *ṁ* möglich.

Die Zapfluft L strömt aus den Spiralkammern 9 durch die Öffnungen 11 in die Zapfluftkammer 7, in der auf Grund der Wirkung der Spiralkammern 9 eine gleichmäßige Verteilung des statischen Drucks pₛ vorhanden ist. Dies verhindert eine Absenkung des statischen Drucks pₛ und damit ein Instabilwerden der Stufen des Verdichters 2 sowie ein Absenken der Pumpgrenze des Verdichters 2. Aus der Zapfluftkammer 7 strömt die Zapfluft L in die Zapfluftentnahmestutzen 6.

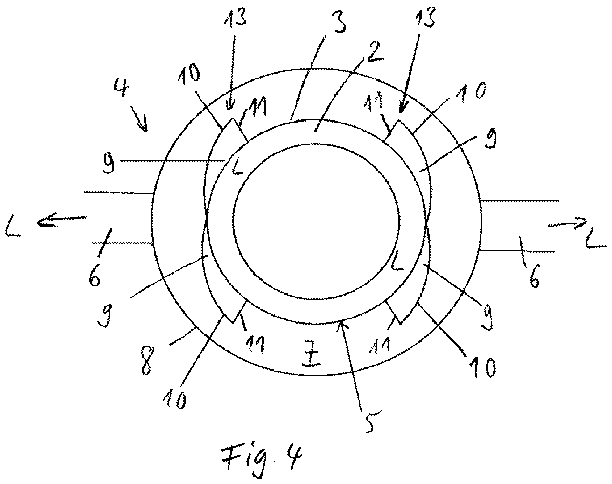

Fig. 4 zeigt eine alternative Ausführungsform einer erfindungsgemäßen Gasturbine 1, von der hier nur der Verdichter 2 angedeutet ist, mit einer Zapflufteinrichtung 4. Die dargestellte Zapflufteinrichtung 4 umfasst hier Zapfstellen 5, zwei Zapfluftentnahmestutzen 6, eine Zapfluftkammer 7 und eine Vorrichtung 13, die vier Spiralkammern 9 umfasst.

Der Verdichter 2 mit dem Gehäuse 3, die Zapfstellen 5 und die Zapfluftkammer 7 entsprechen den Darstellungen in den Fig. 2 und 3. Die einzelnen Spiralkammern 9 sind genauso aufgebaut, wie in Bezug auf Fig. 2 und 3 beschrieben.

Die Zapfluftentnahmestutzen 6 sind einander gegenüber angeordnet und münden in die Zapfluftkammer 7. Gegenüber von jedem Zapfluftentnahmestutzen 6 sind zwei Spiralkammern 9 paarweise angeordnet, wobei die Spiralkammern 9 am Beginn der bogenförmigen Spiralwände 10 am Gehäuse 3 des Verdichters 2 an einander stoßen und die von den Enden der bogenförmigen Spiralwände 10 gebildeten Öffnungen 11 der Spiralkammern 9 von einander abgewandt sind. Die Öffnungen 11 befinden sich zwischen den Zapfluftentnahmestutzen 6.

Die Funktionsweise der Zapflufteinrichtung 4 und der Spiralkammern 9 entspricht der in Bezug auf die Fig. 2 und 3 beschriebenen Funktionsweise. Die paarweise angeordneten Spiralkammern 9 bewirken eine Vergleichmäßigung der Druckverhältnisse in der Spiralkammer 7. An den Zapfluftentnahmestutzen 6 tritt in der Zapfluftkammer 7 keine Absenkung des statischen Drucks (pₛ) auf.

In Fig. 5 ist eine der Spiralkammern 9 in den Fig. 2 bis 4 schematisch und stark gebogen dargestellt.

Die Zapfluft L strömt durch die Zapfstellen 5 im Gehäuse 3 des Verdichters 2 (vgl. Fig. 2 bis 4) in die Spiralkammer 9. Durch die gebogene Spiralwand 10 wird an den Zapfstellen 5 eine Vielzahl von gleich großen Teilmassenströmen *ṁ* der Luft L ausgebildet. Jeder Teilmassenstrom *ṁ* erzeugt an der Spiralwand 10 den gleichen statischen Druck pₛ. Die Spiralkammer 9 fasst die Teilmassenströme *ṁ* zusammen und bildet eine Gesamtströmung der Zapfluft L, die durch die Öffnung 11 aus der Spiralkammer 9 austritt.

Fig. 6 zeigt eine schematisch stark vereinfachte Spiralkammer 9. Hier ist die Spiralkammer 9 in einer Vorderansicht zu sehen. Die Spiralkammer 9 hat einen Querschnitt, der einer mathematischen Rechteckfunktion 12 entspricht.

Der mittlere Abschnitt der Rechteckfunktion 12, der die Öffnung 11 und die Spiralwand 10 bildet, befindet sich zwischen der fünften Statorschaufelreihe S5 und der sechsten Rotorschaufelreihe R6 und überdeckt die Zapfstellen 5. Die beiden seitlich abstehenden Abschnitte der Rechteckfunktion 12 liegen auf dem Gehäuse 3 des Verdichters 2 auf und sind mittels Schrauben am Gehäuse 3 befestigt.

Fig. 7 zeigt eine erste alternative Ausführungsform der Spiralkammer 9. Die Spiralkammer 9 umfasst eine Spiralwand 10, die aus zwei sich überlappenden Wandelementen 10a und 10b gebildet ist. Der Querschnitt der Spiralkammer 9 entspricht daher einer an den Wandelementen 10a und 10b unterbrochenen mathematischen Rechteckfunktion 12.

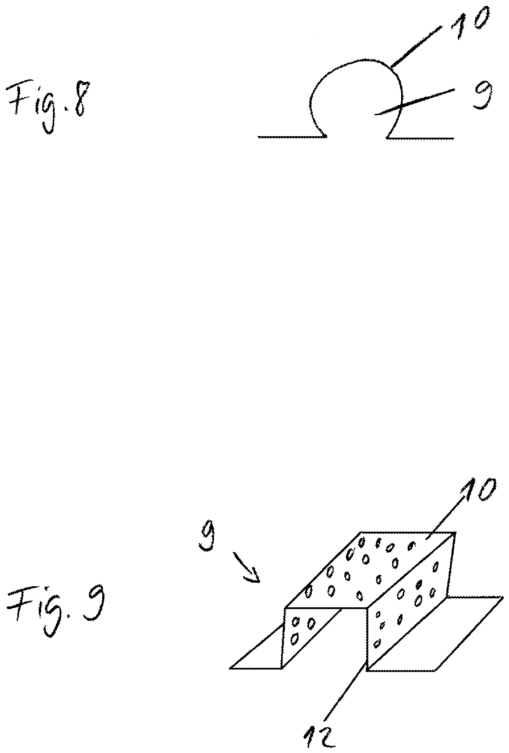

In Fig. 8 ist eine zweite alternative Ausführungsform der Spiralkammer 9 dargestellt. Die Spiralwand 10 der Spiralkammer 9 ist hier im Querschnitt kreisförmig ausgeführt.

Fig. 9 zeigt eine dritte alternative Ausführungsform einer Spiralkammer 9. Bei dieser Ausführungsform ist die im Querschnitt als Rechteckfunktion 12 ausgebildete Spiralwand 10 aus einem gelochten Blech geformt. Die gelochte Spiralwand 10 kann auch, wie in Fig. 7, geteilt oder, wie in Fig. 8, im Querschnitt kreisförmig ausgebildet sein. Die Lochung der Spiralwand 10 kann gleichförmig oder ungleichförmig sein.

### Bezugszeichenliste

- 1: Gasturbine
- 2: Verdichter
- 3: Gehäuse
- 4: Zapflufteinrichtung
- 5: Zapfstelle
- 6: Zapfluftentnahmestutzen
- 7: Zapfluftkammer
- 8: Wand
- 9: Spiralkammer
- 10: Spiralwand
- 10a: Wandelement
- 10b: Wandelement
- 11: Öffnung
- 12: Rechteckfunktion

- S: Statorschaufel
- S5: Fünfte Statorschaufelreihe
- R: Rotorschaufel
- R6: Sechste Rotorschaufelreihe
- L: Zapfluft
- *ṁ*: Teilmassenstrom
- pₛ: Statischer Druck

## Patentansprüche

1. Gasturbine (1) mit einer Zapflufteinrichtung (4) für einen Verdichter (2) der Gasturbine (1), wobei die Zapflufteinrichtung (4) mindestens eine Zapfstelle (5) an einem Gehäuse (3) des Verdichters (2) und mindestens einen Zapfluftentnahmestutzen (6) umfasst, wobei zwischen der Zapfstelle (5) und dem Zapfluftentnahmestutzen (6) eine Zapfluftkammer (7) ausgebildet ist,
**dadurch gekennzeichnet, dass**
die Zapflufteinrichtung (4) mindestens eine Vorrichtung (13) zum Herausleiten zumindest eines Teils der Zapfluft (L) in gleichmäßigen Teilmassenströmen aus der Zapfstelle (5) umfasst, die mindestens zwei paarweise innerhalb der Zapfluftkammer (7) angeordnete Spiralkammern (9) mit jeweils einer Spiralwand (10) gegenüber von der Zapfstelle (5) und jeweils einer Öffnung (11) aufweist, wobei
- der statische Druck (Pₛ) der Zapfluft (L) entlang der Spiralwand (10) jeder Spiralkammer (9) konstant ist und
- die Zapfluftkammer an das Gehäuse (3) des Verdichters (2) und an den mindestens einen Zapfluftentnahmestutzen (6) angrenzt.

2. Gasturbine (1) nach Anspruch 1, **dadurch gekennzeichnet, dass** jeweils zwei paarweise angeordnete Spiralkammern (9) und ein Zapfluftentnahmestutzen (6) in diametraler Richtung einander gegenüber angeordnet sind.

3. Gasturbine (1) nach einem der Ansprüche 1 und 2, **dadurch gekennzeichnet, dass** die Öffnungen (10) von jeweils zwei paarweise angeordneten Spiralkammern (9) in Umfangsrichtung von einander abgewandt sind.

4. Gasturbine (1) nach einem der Ansprüche 1 bis 3, **dadurch gekennzeichnet, dass** die Öffnungen (11) von zwei in Umfangsrichtung gegenüber liegenden Spiralkammern (9) zwischen zwei Zapfluftentnahmestutzen (6) angeordnet sind.

5. Gasturbine (1) nach Anspruch 4, **dadurch gekennzeichnet, dass** die Öffnungen (11) von zwei gegenüber liegenden Spiralkammern (9) in Umfangsrichtung von einander beabstandet sind.

6. Gasturbine (1) nach Anspruch 4, **dadurch gekennzeichnet, dass** sich die Öffnungen (11) von zwei gegenüber liegenden Spiralkammern (9) in Umfangsrichtung überlappen.

7. Gasturbine (1) nach einem der Ansprüche 1 bis 6, **dadurch gekennzeichnet, dass** die Spiralkammern (9) in Längsrichtung geteilte Spiralwände (10a, 10b) aufweisen, die sich überlappen.

8. Gasturbine (1) nach einem der Ansprüche 1 bis 7, **dadurch gekennzeichnet, dass** die Spiralkammern (9) einen zur Zapfstelle (5) offenen Querschnitt aufweisen, der einer eckigen oder abgerundeten, unterbrochenen oder ununterbrochenen mathematischen Rechteckfunktion (12) entspricht.

9. Gasturbine nach einem der Ansprüche 1 bis 8, **dadurch gekennzeichnet, dass** die Spiralwand (10) im Querschnitt kreisförmig und an der Zapfstelle (5) unterbrochen ist.

10. Gasturbine (1) nach einem der Ansprüche 1 bis 9, **dadurch gekennzeichnet, dass** jede Spiralkammer (9) aus mindestens einem Blech gebildet ist.

11. Gasturbine (1) nach Anspruch 10, **dadurch gekennzeichnet, dass** das Blech gleichförmig oder ungleichförmig gelocht ist.

12. Gasturbine (1) nach einem der Ansprüche 1 bis 9, **dadurch gekennzeichnet, dass** die Spiralkammern (9) mittels Schrauben am Gehäuse (3) des Verdichters (2) befestigt sind.

13. Gasturbine (1) nach einem der Ansprüche 1 bis 12, **dadurch gekennzeichnet, dass** mehrere Zapfstellen (5) vorhanden sind, die rechteckige, kreisförmige oder andere Formen oder jeweils unterschiedliche Formen aufweisen.

14. Gasturbine (1) nach Anspruch 13, **dadurch gekennzeichnet, dass** die Zapfstellen (5) gleiche oder unterschiedliche Größen aufweisen.

15. Gasturbine (1) nach Anspruch 13 oder 14, **dadurch gekennzeichnet, dass** die Zapfstellen (5) jeweils mit einer Rampe versehen sind.

## Claims

1. Gas turbine (1) having a bleed-air means (4) for a compressor (2) of the gas turbine (1), where the bleed-air means (4) includes at least one tapping point (5) on a casing (3) of the compressor (2) and at least one bleed-air extraction nozzle (6), where a bleed-air chamber (7) is formed between the tapping point (5) and the bleed-air Extraction nozzle,
**characterized in that**
the bleed-air means (4) includes at least one device (13) for passing at least a portion of the bleed air (L) in even partial mass flows out of the tapping point (5), said device having at least two helical chambers (9) arranged in pairs inside the bleed-air chamber (7) and each helical chamber having a helical wall (10) opposite the tapping point (5) and an opening (11), where
- the static pressure (Pₛ) of the bleed air (L) along the helical wall (10) of each helical chamber (9) is constant, and
- the bleed air chamber adjoins the casing (3) of the compressor (2) and the at least one bleed-air extraction nozzle (6).

2. Gas turbine (1) in accordance with Claim 1, **characterized in that** two each helical chambers (9) disposed in pairs and one bleed-air extraction nozzle (6) are facing each other in the diametral direction.

3. Gas turbine (1) in accordance with one of the Claims 1 and 2, **characterized in that** the openings (10) of two each helical chambers (9) disposed in pairs are facing away from each other in the circumferential direction.

4. Gas turbine (1) in accordance with one of the Claims 1 to 3, **characterized in that** the openings (11) of two circumferentially opposite helical chambers (9) are arranged between two bleed-air tapping nozzles (6).

5. Gas turbine (1) in accordance with Claim 4, **characterized in that** the openings (11) of two opposite helical chambers (9) are spaced from each other in the circumferential direction.

6. Gas turbine (1) in accordance with Claim 4, **characterized in that** the openings (11) of two opposite helical chambers (9) overlap each other in the circumferential direction.

7. Gas turbine (1) in accordance with one of the Claims 1 to 6, **characterized in that** the helical chambers (9) feature helical walls (10a, 10b) split in the longitudinal direction and overlapping each other.

8. Gas turbine (1) in accordance with one of the Claims 1 to 7, **characterized in that** the helical chambers (9) have a cross-section which is open towards the tapping point (5) and which corresponds to an angular or rounded, interrupted or uninterrupted mathematical square function (12).

9. Gas turbine (1) in accordance with one of the Claims 1 to 8, **characterized in that** the helical wall (10) is circular in cross-section and interrupted at the tapping point (5).

10. Gas turbine (1) in accordance with one of the Claims 1 to 9, **characterized in that** each helical chamber (9) is formed from at least one metal sheet.

11. Gas turbine (1) in accordance with Claim 10, **characterized in that** the metal sheet is uniformly or non-uniformly perforated.

12. Gas turbine (1) in accordance with one of the Claims 1 to 9, **characterized in that** the helical chambers (9) are attached to the casing (3) of the compressor (2) by means of bolts.

13. Gas turbine (1) in accordance with one of the Claims 1 to 12, **characterized in that** several tapping points (5) are provided, having rectangular, circular or other shapes, or shapes differing from one another.

14. Gas turbine (1) in accordance with Claim 13, **characterized in that** the tapping points (5) have identical or different sizes.

15. Gas turbine (1) in accordance with Claim 13 or 14, **characterized in that** the tapping points (5) are each provided with a ramp.

## Revendications

1. Turbine à gaz (1) avec un moyen de prélèvement d'air (4) pour un compresseur (2) de la turbine à gaz (1), sachant que le moyen de prélèvement d'air (4) comprend au moins un point de soutirage (5) sur un carter (3) du compresseur (2) et au moins une tubulure de prise d'air de prélèvement (6), sachant qu'une chambre d'air de prélèvement (7) est formée entre le point de soutirage (5) et la tubulure de prise d'air de prélèvement (6),
**caractérisée en ce que**
le moyen de prélèvement d'air (4) comprend au moins un dispositif (13) servant à évacuer au moins une partie de l'air de prélèvement (L) en flux massiques partiels uniformes par le point de soutirage (5) et comprenant au moins deux chambres hélicoïdales (9) disposées par paire à l'intérieur de la chambre d'air de prélèvement (7) avec chacune une paroi hélicoïdale (10) en face du point de soutirage (5) et chacune une ouverture (11), sachant que
- la pression statique (Pₛ) de l'air de prélèvement (L) est constante le long de la paroi hélicoïdale (10) de chaque chambre hélicoïdale (9), et
- la chambre d'air de prélèvement avoisine le carter (3) du compresseur (2) et l'au moins une tubulure de prise d'air de prélèvement (6).

2. Turbine à gaz (1) selon la revendication n° 1, **caractérisée en ce que** deux chambres hélicoïdales (9) disposées par paire et une tubulure de prise d'air de prélèvement (6) sont chaque fois disposées en face l'une de l'autre dans le sens diamétral.

3. Turbine à gaz (1) selon une des revendications n° 1 et n° 2, **caractérisée en ce que** les ouvertures (10) de chaque fois deux chambres hélicoïdales (9) disposées par paire sont opposées l'une à l'autre dans le sens circonférentiel.

4. Turbine à gaz (1) selon une des revendications n° 1 à n° 3, **caractérisée en ce que** les ouvertures (11) de deux chambres hélicoïdales (9) en face l'une de l'autre dans le sens circonférentiel sont disposées entre deux tubulures de prise d'air de prélèvement (6).

5. Turbine à gaz (1) selon la revendication n° 4, **caractérisée en ce que** les ouvertures (11) de deux chambres hélicoïdales (9) en face l'une de l'autre sont espacées l'une de l'autre dans le sens circonférentiel.

6. Turbine à gaz (1) selon la revendication n° 4, **caractérisée en ce que** les ouvertures (11) de deux chambres hélicoïdales (9) en face l'une de l'autre se chevauchent dans le sens circonférentiel.

7. Turbine à gaz (1) selon une des revendications n° 1 à n° 6, **caractérisée en ce que** les chambres hélicoïdales (9) présentent des parois hélicoïdales (10a, 10b) divisées dans le sens longitudinal, lesquelles parois se chevauchent.

8. Turbine à gaz (1) selon une des revendications n° 1 à n° 7, **caractérisée en ce que** les chambres hélicoïdales (9) présentent une section ouverte vers le point de soutirage (5), laquelle section correspond à une fonction mathématique rectangulaire (12) discontinue ou continue, de forme angulaire ou arrondie.

9. Turbine à gaz (1) selon une des revendications n° 1 à n° 8, **caractérisée en ce que** la paroi hélicoïdale (10) est de forme circulaire en coupe et est interrompue au niveau du point de soutirage (5).

10. Turbine à gaz (1) selon une des revendications n° 1 à n° 9, **caractérisée en ce que** chaque chambre hélicoïdale (9) est constituée d'au moins une tôle.

11. Turbine à gaz (1) selon la revendication n° 10, **caractérisée en ce que** la tôle est perforée uniformément ou non uniformément.

12. Turbine à gaz (1) selon une des revendications n° 1 à n° 9, **caractérisée en ce que** les chambres hélicoïdales (9) sont fixées au carter (3) du compresseur (2) au moyen de vis.

13. Turbine à gaz (1) selon une des revendications n° 1 à n° 12, **caractérisée en ce qu'**il existe plusieurs points de soutirage (5) qui présentent une forme rectangulaire, circulaire ou autre ou chacun une forme différente.

14. Turbine à gaz (1) selon la revendication n° 13, **caractérisée en ce que** les points de soutirage (5) présentent des tailles identiques ou différentes.

15. Turbine à gaz (1) selon la revendication n° 13 ou n° 14, **caractérisée en ce que** les points de soutirage (5) sont pourvus chacun d'une rampe.
